# NEW EUROPEAN PATENT SPECIFICATION

(11) **EP 0 331 838 B2**
(45) Date of publication and mention of the opposition decision: **12.06.1996**
(45) Mention of the grant of the patent: 10.03.1993
(21) Application number: 88310693.2
(22) Date of filing: 11.11.1988
(51) Int. Cl.: H04M 9/00, H04Q 11/04

(54) **Digital key telephone system**
Digitales Tastengegensprechsystem
Système téléphonique numérique à touches

(30) Priority: 10.03.1988 US 166345
(43) Date of publication of application: 13.09.1989
(73) Proprietor: NORTHERN TELECOM LIMITED, Montreal, Quebec H2Y 3Y4 (CA)
(72) Inventor: Nizamuddin, Nadir, Ontario K2M 1M6 (CA); Williams, John William Joseph, Ontario, K2K 1P4 (CA); Redmond, Alan Morris, Ontario, K2M 1S4 (CA); Morley, Robert Samuel, Ontario K1N 6W1 (CA); Robertson, David Joseph, Ontario K1Y 6Y3 (CA); Maginley, Ronald James, Ann Arbor, Michigan (US); Chapman, Alan Stanley John, Ontario K2K 1V5 (CA); Thomas, Terence Neil, Ontario K2C 3H2 (CA)
(74) Representative: Dennis, Mark Charles

(56) References cited:
- WO-A-85/01855
- DE-A- 3 212 023
- FR-A- 8 106 812
- FR-A- 8 610 094
- GB-A- 2 047 048
- US-A- 4 292 474
- US-A- 4 363 936

## Description

The invention is in the field of small telephone systems and the like, sometimes referred to as key telephone systems. More particularly, the invention relates to signalling and supervision messaging functions in a digital key telephone system, one example of which is disclosed in a co-pending US application entitled "Digital Key Telephone System", serial number 126710, which was filed on November 30, 1987 by George Irwin et al, now US-A-4873682.

### Background of the Invention

Some examples of small telephone systems have been generally referred to as key telephone systems. Traditionally a key telephone system is provided by extensive telephone line and control lead wiring between key telephone sets. Each key telephone line extends to a telephone exchange. Each of the telephone sets includes a plurality of push button switches or keys, each for connecting the telephone set to a particular telephone line among a plurality of telephone lines routed to the key telephone set. The switching function of line selection is mechanically provided and distributed among the key telephone sets. Any features in addition to plain ordinary telephone service (POTS) must be added on a per line basis. The primary advantage of these systems is economy with small size. However, if such a system is required to expand along with the organization it serves, over a time it eventually becomes more expensive on a per line and feature basis than a private branch exchange would be. Key telephone systems are also characteristically of the analog signal type, and therefore are impractical to interface with an ISDN as will likely be desired by business customers in the near future.

A known key telephone system is described in US-A-4363936. In this known system multifunction telephones are connected to common equipment by a voice signal path and a data signal path. Supervisory information passes over the data signal path in the form of polled messages that are sent from the common equipment to the telephone. Sense information is received by the common equipment from the telephone. The transmission is by frequency modulation, such as frequency-shift-keying modulation techniques.

Another known key telephone system is disclosed in US patent 4839888 (equivalent to French patent 8610094). This discloses a telephone system wherein a junctor (6) provides four ports for connection of four telephones (2). Each of the four ports has a dedicated channel (one of i to i+3) assigned for the transmission and reception of information, i.e. voice or data bytes. The junctor also has four dedicated channels (i+4 to i+7) assigned for the transmission and reception of signalling information. Therefore a total of eight channels is assigned to each junctor, half of them for communication of voice or data, and half of them for the transfer of signalling. In this system all the channel information must traverse the switch memory 17; but signalling can occupy half the channels and so half the capacity of the switch memory is occupied by the signalling.

### Summary of the Invention

It is an object of the invention to provide a telephone system wherein the functional advantages of key telephone systems and digital signal communications are co-existent via station apparatus connected to the system.

In essence, an example of the key telephone system includes a central unit (KSU), and a number of stations. Stations may be, but are not limited to be, telephone sets. Other forms of stations include data sets and interface units to C.O. trunks. A general purpose computer, for example a personal computer, may act as a station, with a suitable interface unit. Stations are connected to KSU ports using digital signals over twisted wire pairs. Some stations may physically be part of the KSU, and be connected thereto by means other than twisted pair. The KSU itself may include more than one physical unit.

A primary function of the key telephone system is to provide a point to point communication between the stations, in the form of switched, bidirectional, 64 kb/s channels. In one example, each station has access to two such channels. Each station also has access to a 16 kb/s S and S channel used for system purposes such as signalling and supervision. Each station, and the KSU, contain some form of processing device, for example, a software controlled microprocessor, or a logic network. The S and S channel allows one station at a time to send a digitally encoded message to the KSU. More specifically, it allows the processing device at the station to send such a message to the processing device in the KSU. This reference to processing devices should be assumed wherever the action of a station or the KSU is mentioned. The S and S channel similarly allows the KSU to send a message to any one or more stations.

Each message is of a defined format. In this example there are two formats, each of which require control information. Depending on the control information in an incoming message to the KSU, the KSU may retransmit that message to stations as just described. Hence, a station may indirectly send a message to any other station or to all stations, by relying on this KSU operation. The KSU operates in accordance with information contained in the messages, to set up and tear down 64 kb/s circuit connections between stations. Stations use such a connection for PCM voice, or for data, or as another means to exchange messages.

The operation of a station is controlled directly by the processing element at that station. The processing element runs a low level program, and may run higher level programs. The low level program controls indicators and other devices at the station, senses the state of input devices, and handles generation and interpretation of messages. A higher level of program may control the sequences of operation of the station, and co-operate with other higher level programs at other stations or in the KSU to provide desired operation of the key telephone system as a whole. The behaviour of a station is determined by the program running in that station, or by messages received from a program running in the KSU. The operation may be wholly or partially determined by a program running in some other station, including the case where that station is attached to or incorporates a general purpose digital computer.

Since the behaviour of a station may be determined by the program running in another station, it is possible to add new types of stations, as such become available, or to install new software in existing stations, to affect the behaviour of previously connected stations. Thus an added station may provide new features, possibly requiring novel sequences of keystrokes and display and indicator operation. The new feature is or may be made available at existing stations without reprogramming those stations or the KSU.

The added station providing the new feature may in fact be a reprogrammable device such as a personal computer. Thus new features may be added solely by software change or addition in an attached computer system, by techniques generally available, without participation of the key telephone system manufacturer or vendor. Of course, all of this extreme freedom of access to and control of the communication functions and features may be subjected to the typical security and priority fetters.

Specifically the invention is embodied in a key telephone system for providing digital signal communications between a plurality of ports via a switching means, each port being for the connection of a respective station apparatus, a communications path being connected between the switching means and the plurality of ports, and operation of the switching means being directed by a central processor, characterised by:
the communications path being operable to provide n pairs of time division multiplex transmit (TDMT) and time division multiplex receive (TDMR) channels, each channel including a plurality of bit positions, at least one TDMT, TDMR channel pair being exclusively associated with each port, and each said TDMT channel and TDMR channel including a signalling and supervision (S and S) bit position in said plurality of bit positions;
the switching means being operable to couple communications signals between bit positions of selected ones of the TDMT channels and bit positions of selected ones of the TDMR channels, excluding said S and S bit positions, as directed by the central processor; and
an interface means for transferring information from the said S and S bit position of a selected TDMT channel to the central processor and for transferring information from the central processor to the S and S bit position of at least one of the TDMR channels, independently of the communications paths provided by the switching means.

According to another aspect of the invention there is provided a method of operating a key telephone system for providing digital signal communications between a plurality of ports via a switching means, each port being for the connection of a respective station apparatus, a communications path being connected between the switching means and the plurality of ports, wherein operation of the switching means is directed by a central processor, each of said station apparatus having a processing device for controlling functions of the station apparatus in response to a key control action of a user origin and in response to messages received from the central processor, the method being characterised by the steps of:
(a) providing at least one bidirectional time division multiplex channel (TDMT, TDMR) channel in association with each station apparatus, via the communications path;
(b) providing at least one time division multiplex message channel (S and S) in association with each station apparatus, via the communications path;
(c) routinely selecting one of said station apparatus for transmission of a message via its associated message channel;
(d) exchanging call set up messages between the central processor, a calling station apparatus and a called station apparatus, via their associated message channels; and
(e) in response to a predetermined message, from the called station apparatus, synchronously exchanging information between the bidirectional time division multiplex channels associated with the calling and called station apparatus.

According to a further aspect of the invention there is provided a key telephone system for providing digital signal communications between a plurality of ports via a switching means, each port being for the connection of a respective station apparatus, a communications path being connected between the switching means and the plurality of ports, wherein operation of the switching means is directed by a central processor, and wherein each station apparatus has a processing device for controlling functions of the station apparatus in response to a key control action of a user origin and in response to messages received from the central processor, the telephone system being characterised by:
a synchronous communication medium for providing a synchronous bidirectional communication channel (TDMT, TDMR) and a synchronous bidirectional message channel (S and S) at each station apparatus via its associated port;
synchronous switch means for transferring information between selected ones of the bidirectional communication channels in response to control signals;
the central processor being operable for routinely identifying message channels from which a message from one of said processing devices is receivable, and in response to a received message for generating one of said control signals and at least one address, for defining a message channel for which a message for a corresponding one of said processing devices is destined; and
an interface means for detecting a request to send, in response to a first predetermined signal characteristic in one of the routinely identified message channels, for soliciting and receiving said message, and for transferring destined messages to message channels having been defined by the central processor.

According to another aspect of the invention there is provided a method of operating a key telephone system having a plurality of ports, each port being for connection of a respective station apparatus including a processing device, the method including the steps of providing digital signal communications between the ports via a switching means over a communications path between the switching means and the ports, directing operation of the switching means from a central processor, and controlling functions in each said station apparatus from its processing device in response to a key control action of user origin and in response to messages received from the central processor, the method being characterised by the steps of:
(a) synchronously providing a time multiplexed bidirectional communications channel (TDMT, TDMR) and a time multiplexed bidirectional signalling and supervision channel (S and S) exclusively for each of the station apparatus via its associated port and the communication path;
(b) routinely selecting one of said ports for transmission of a signalling and supervision message from its associated station apparatus, and in the central processor receiving a signalling and supervision message via the selected port;
(c) in the central processor, generating signalling and supervision messages in response to messages received in step (b); and
(d) transmitting each of said generated signalling and supervision messages via the signalling and supervision channel associated with the station apparatus for which the message is destined.

### Brief Description of the Drawings

An example embodiment is described with reference to the accompanying drawing in which:
Figure 1 is a block diagram of a key telephone system in accordance with the invention;
Figure 2 is a block diagram of a software architecture for supporting FUNCTIONAL station apparatus in the key telephone system in Figure 1;
Figure 3 is a block diagram of a software architecture similar to the software architecture illustrated in figure 2, but with an added capability of supporting STIMULUS station apparatus as well as the FUNCTIONAL station apparatus;
Figure 4 is a graphical illustration of operating timing pulses and or signals generated within a circuit switch module used in figure 1;
Figure 5 is a block diagram of a timing sequence generator used in the circuit switch module for providing the timing signals illustrated in figure 4;
Figure 6 is a block schematic diagram of counters, used in a circuit switch module in figure 1, and arranged to provide time slot and channel addresses for operation of the circuit switch module;
Figure 7 is a block schematic diagram of a converter circuit used in the circuit switch module in figure 1;
Figure 8 is a graphical illustration of various timing signals used in the operation of the converter circuit in figure 7;
Figure 9 is a block schematic diagram of a time switch circuit used in the circuit switch module in figure 1 to provide circuit switched communication paths in the key telephone system;
Figure 10 is a block schematic diagram of a time switch conference circuit in the circuit switch module and used in combination with the time switch circuit of figure 9 to provide a conference feature in the key telephone system;
Figure 11 is a block schematic diagram of an interface circuit used in the key telephone system illustrated in figure 1; and
Figure 12 is a block schematic diagram of a processor interface circuit used in the key telephone system illustrated in figure 1.

### Description of the Example Embodiment

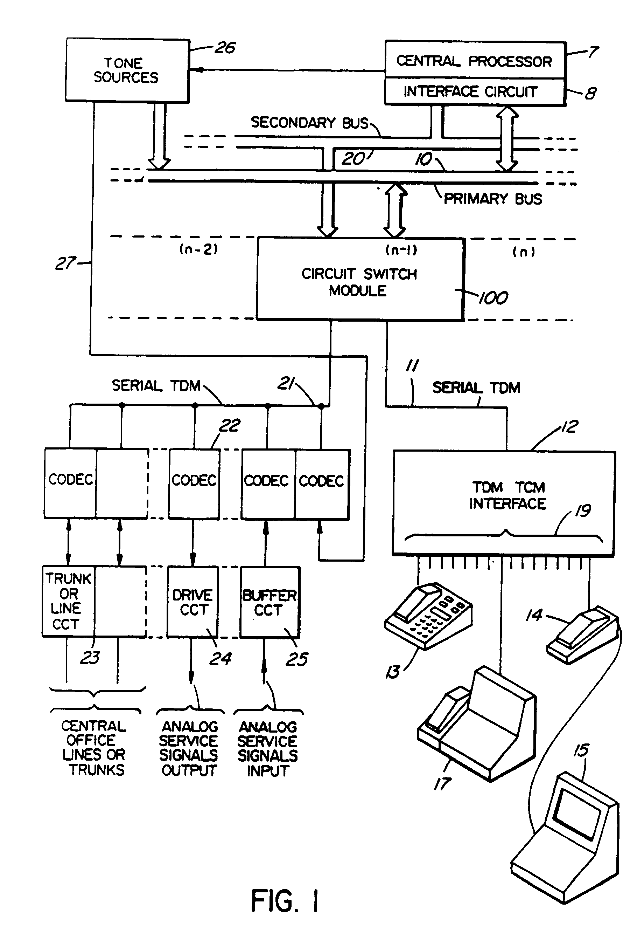

In figure 1 a digital key telephone system provides for connection of various digital telephone instruments, as exemplified at 13 and 14, and various digital data terminals, personal computers or the like, as exemplified at 15 and 17, which are able to communicate, via the system, with one another as appropriate, and with other devices via line or trunk circuits 23. The lines and or trunks serve to connect the digital key telephone system with other telephone facilities, for example a central office or private exchange, not shown. A back bone of the digital key telephone system is provided by a short parallel time division multiplex (TDM) bus 10, which provides a wide band communication path between up to nine 64 channel circuit switch modules 100, a central processor interface circuit 8 and tone sources 26. If any of the tone sources 26 provide an analog signal, such is coupled into the system via a lead 27. The bus 10 is referred to as a primary bus, and a secondary bus 20, similar to the primary bus 10, provides for unidirectional communications from the interface circuit 8. Each of the circuit switch modules 100 couples 64 ten bit transmit serial channels to predetermined corresponding time slots in the bus 10, and up to 64 parallel selected TDM time slots on either of the buses 10 or 20 to 64 ten bit receive serial channels. 32 of the serial transmit and receive channels are coupled to an internal ports circuit 12 via a serial TDM path 11. The remaining 32 serial transmit and receive channels are coupled to external port circuits at 22 via a serial TDM path 21. Each of the channels is capable of transmitting a binary signal pulse stream at a rate of 80 kilo bits per second, with at least 64 kilo bits per second being available as a channel for pulse code modulated (PCM) voice information, or data information. The remaining sixteen kilobits may be committed to supervisory and signalling communications, in association with the PCM or data information. In this example the internal ports circuit 12 consists of sixteen TDM time compression multiplex (TCM) interfaces. The TCM method of signal transmission is sometimes referred to as "Ping Pong" transmission. Each of these interfaces provides a transmit path between each of TCM links 19 and two predetermined and fixed serial TDM channels in the serial TDM path 11. In a similar manner analog signals are interfaced to and from various circuits shown at 23, 24 and 25, via the serial TDM path 21 and the external ports 22 provided by CODEC circuits. Alternately, it may be advantageous to provide an external TDM port for interfacing with another telephone facility via a digital signal transmission link, T1 or DS30 for example. However in this case, each CODEC circuit interfaces with a predetermined and fixed transmit and receive channel pair of the serial TDM path 21. Hence, for each and every port (that is a place where a digital telephone instrument or other digital device or a digitally interfaced or compatible line, trunk and the like may be connected to the digital key telephone system), there is at least one predetermined ten bit parallel time slot in the primary bus 10 which is allocated to receive information from the line appearance. In an alternate example, the time slots on the bus 10 correspond to line appearances for the purpose of transmitting information thereto. However, such alternate example is not herein further discussed. A central processor 7 is coupled via the interface circuit 8 to the primary bus 10 for communication via a predetermined 32 of the ten bit parallel time slots. The interface circuit 8 may receive all ten bits of each time slot on the bus 10. Normally, only the two bits corresponding to a sixteen kilobit sub-channel are transferred from the bus 10 to the central processor 7 by the interface circuit 8, for purposes of call control. The interface circuit 8 provides signalling and supervision from the central processor 7 via the secondary bus 20 at time slot occurrences corresponding to intended line appearance destinations via the appropriate circuit switch module 100. Therefore each circuit switch module 100 transmits 10 bits to the primary bus 10 but receives and switches only 8 bits from the primary bus 10. The other two bits are received at the appropriate time via the secondary bus 20.

In this example, each port associated communication path provides for full duplex operation with two words, of ten bits each, being exchanged every 125 micro seconds. In at least one of these words, bit positions 0-7 are dedicated to one of data or voice, the bit position 8 is dedicated to signalling and supervision, and the bit position 9 is dedicated to validation of signalling and supervision. The signalling and supervision information is collected from, and distributed to, the port associated channels via the interface circuit 8 under the direction of the central processor 7. The collected information is gathered into byte groupings by the interface circuit 8 for transfer to the central processor 7 and by a somewhat complimentary function, information is distributed from the central processor 7, via the interface circuit 8 into bit position 8 of a selected one of the channels or of all the channels.

The key telephone system is intended to support two generically different types of station apparatus: one being a very basic telephone station set hereafter referred to as a STIMULUS set or an S set, which includes a bit stream interface device, a simple processing device, and a CODEC; and the other being a more complex featured autonomous station apparatus which may take the form of a proprietary key telephone set, interface apparatus, or proprietary display telephone or data terminal. Such instrument is referred to as a FUNCTIONAL set and such reference is intended to indicate that the apparatus contains some call processing instructions in the form of software or firmware. For convenience, any station apparatus which is not an S set is hereafter referred to as a FUNCTIONAL set or an F set.

In the S set, any change in its operating state, for example ON HOOK to OFF HOOK or a key depression, is communicated to the central processor, via the S set processing device, the bit position 8 and the interface device. This is accomplished in the S set by a continuous (request to send RTS) assertion of "00" in the bit position 8 and 9 of the outgoing channel, until a validated clear to send (CTS) is received in bit positions 8 and 9 of the incoming channel. When the CTS is recognized in the S set a STIMULUS protocol message indicating OFF HOOK is transmitted via the S and S bit positions 8. Thereafter, a typical call progress proceeds by way of exchange of STIMULUS protocol messages.

By way of exemplary contrast in the F set, a request to send (RTS) may be generated after an OFF HOOK is followed by sufficient telephone call dialing information having been keyed in by a telephone user. In this case the processing device and its operational programing perform basic call processing, and in addition to providing dial tone at the appropriate moment, may also generate ring back or busy tone. The F set communicates similar to the S set, using the S and S bit positions 8. After a CTS is received from the central processor the F set transmits a FUNCTIONAL protocol message.

Table 1 illustrates structural arrangements of messages of STIMULUS protocol and FUNCTIONAL protocol.

**Table 1**

| HEADER Binary | (HEX) | TYPE | LENGTH |
|---|---|---|---|
| 0X000000 | (40H) to (5FH) | STIMULUS | 1 BYTE |
| 0X011111 | | | |
| 0X100000 | (60H) to (67H) | STIMULUS | 2 BYTES |
| 0X100111 | | | |
| 0X101000 | (68H) to (6FH) | STIMULUS | MULTI-BYTE |
| 0X101111 | | | |
| 0X110000 | (70H) to (7FH) | FUNCTIONAL | VARIABLE |
| 0X111111 | | | |

In the header, bit positions left to right are 7 through 0. In particular, bit positions 5 and 4 indicate the protocol of the message. FUNCTIONAL messages in this arrangement are indicated by both of the bit positions 5 and 4 being asserted "1". S STIMULUS MESSAGES are indicated by at least one of the bit positions 5 and 4 being asserted "0". The purpose of each of the bit positions in the header is illustrated in Table 2.

**Table 2**

| BIT | 7 | 6 | 5 | 4 | 3 | 2 | 1 | 0 |
|---|---|---|---|---|---|---|---|---|
| PURPOSE | START | CLEAR TO SEND | PROTOCOL | | SECONDARY INFORMATION | | | |

In the case of a header being in a range of 40H - 5FH, the header is the actual message, the gist of which is carried in the bit positions 3-0. In messages of more than one byte, the second and subsequent bytes carry information. The quantity or number of the information bytes within a message are specified in lesser significant bit positions of the header.

The CTS bit position indicates a clear to send message and is only of significance when received by an F set or an S set.

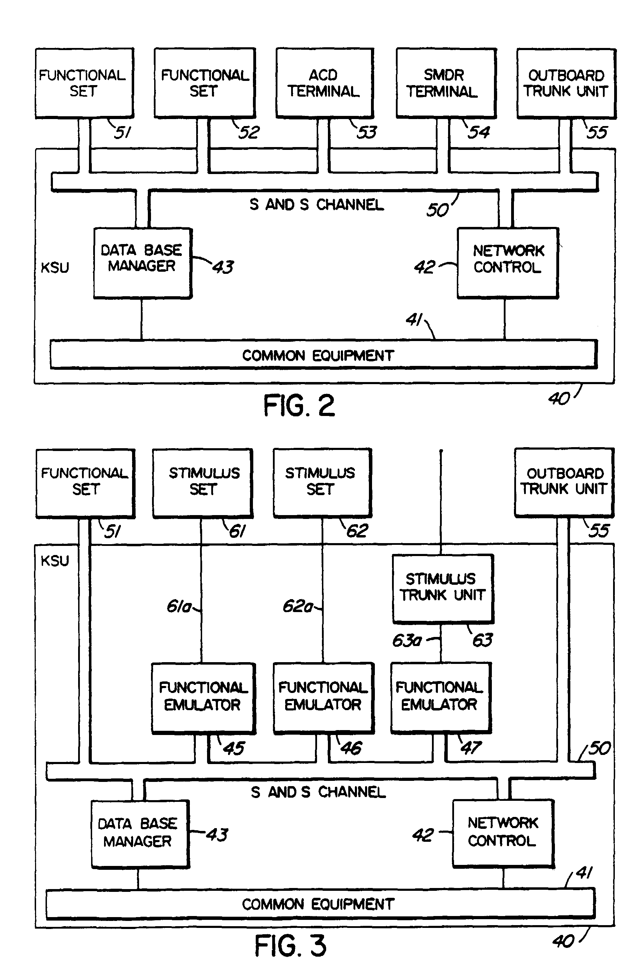

Plural protocols and central processor flow control of messages, communicated via the S and S bit positions, permit advantageous software architectures as illustrated in figures 2 and 3, to be resident in a key telephone system as shown in figure 1. In figure 2, a key system unit (KSU) 40 includes common equipment 41 coupled with an S and S channel 50 via software elements, namely a network controller 42 and a data base manager 43. The common equipment 41 is in effect representative of a hardware interface with the buses 10 and 20 in figure 1 but also includes firmware and software resident in the central processor 7. In this example, the central processor 7 is provided by a 68008 microprocessor available from Motorola Corp., of 1303 East Algonquin Road, Roselle, Illinois, 60196, U.S.A. The central processor 7 is arranged to support modularized software elements such as the elements 42 and 43.

The S and S channel is a message channel which is in operational effect common to all the FUNCTION station apparatus of the system. Exemplified are F sets 51 and 52, an automatic call distribution (ACD) terminal 53, a system management data retrieval (SMDR) terminal 54 and an outboard trunk unit 55 for connection to a central office (not shown). Each of these is a FUNCTIONAL apparatus which includes its own processing device and call processing software.

Figure 3 illustrates an example of an architecture configured similar to figure 2, but for supporting STIMULUS sets in addition to FUNCTIONAL sets. In this case, the common equipment 41 also supports additional modular software in the form of FUNCTIONAL emulators 45, 46 and 47. These FUNCTIONAL emulators perform, on behalf of respective STIMULUS sets 61 and 62, and a STIMULUS trunk unit 63, to make these appear to the rest of the key telephone system to also be FUNCTIONAL sets. Hence, in some system configurations, economy on a per port basis is achieved. It should be noted that FUNCTIONAL elements 52-54 may also be present in figure 3 but were omitted for convenience of illustration.

In operation of the key telephone systems in accordance with figure 2 or 3, any F set receiving a CTS message is able to transmit to all FUNCTIONAL entities, be these apparatus or emulators. Likewise, F emulators are able to transmit to all FUNCTIONAL entities but as the F emulators are software based in the KSU, the previously discussed arbitration ritual of RTS and CTS is not required. Any FUNCTIONAL entity which may thus respond or act in accordance with its own programing as warranted by the content of the transmitted FUNCTIONAL message. Any such FUNCTIONAL message involving a STIMULUS set is intercepted and subsequently acted upon by the corresponding FUNCTIONAL emulator software module. This effectively results in a series of STIMULUS messages being exchanged between the FUNCTIONAL emulator and its associated STIMULUS set via its S and S channel. For example, S set 61 and emulator 45 exchange messages via an S and S channel 61a.

In FUNCTIONAL messaging the message bits are distributed or relayed to every channel occurrence in each frame. Although STIMULUS sets or units are thus exposed to the FUNCTIONAL messages, the STIMULUS processor devices therein are arranged to disregard FUNCTIONAL messages as recognized by the distinct header as illustrated in the foregoing tables 1 and 2. On the other hand, STIMULUS messages are unidirectional. Distribution of a STIMULUS message is confined to the channel occurrence which corresponds to a STIMULUS set for which the STIMULUS message is destined.

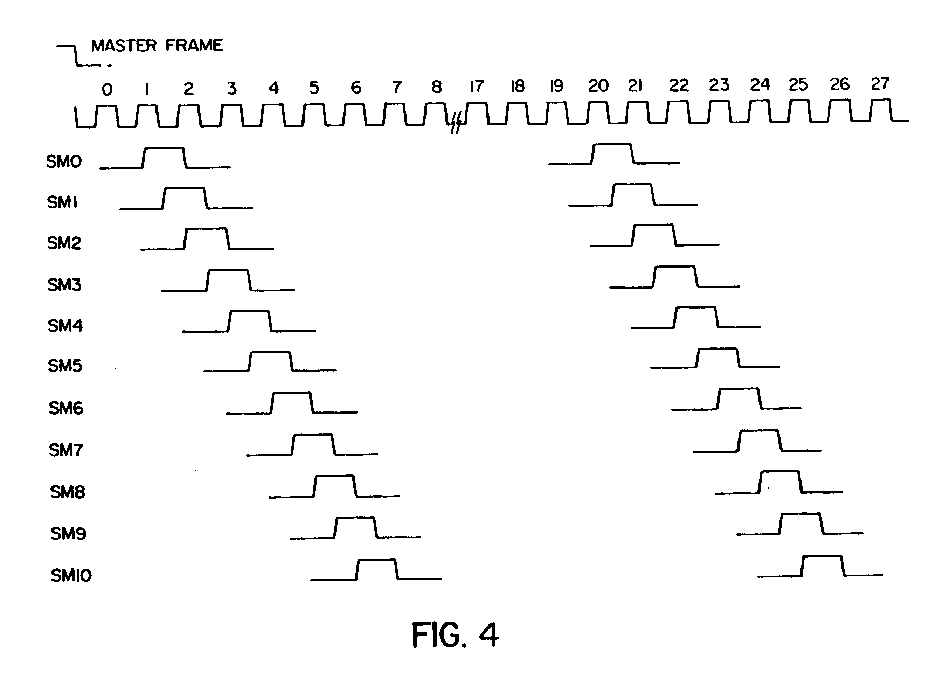

Flow control of FUNCTIONAL and STIMULUS messages is discussed from a hardware viewpoint after the following discussion of the structure and operation of the modular circuit switch module 100 with reference to figures 4-10.

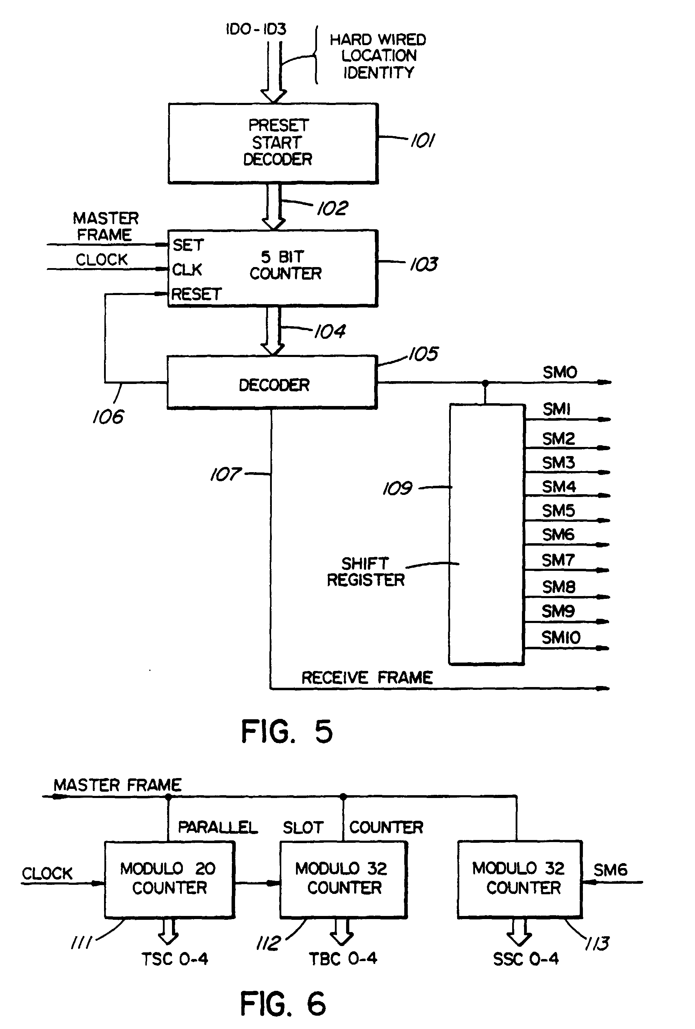

In order that each of one or more circuit switch modules 100 be able to transfer information from the serial TDM paths 11 and 21 to the parallel TDM bus 10 without contention, a phased timing sequencer, as shown in figure 5, resides within each of the modules 100 for regulating the functions of the module. Wave forms exemplified in figure 4 illustrate a master frame timing pulse occurring at a rate of 1 Khz, clock pulses numbered 0-27 occurring at a rate of 5.12 MHz and state machine timing pulses SMO-SM10. With the switch module 100 installed in the system, a preset start decoder 101 is connected to a hard wired location, not shown, which provides an identity, that is a fixed four bit binary word, ID0.ID3. The combination of the signal states of the bits ID0.ID3 is unique for each possible switch module location in the digital key telephone system. The preset start decoder 101 generates a 5 bit binary word on a bus 102, in response to the combination of bit states as shown in table 1. A five bit counter 103 is preset by each occurrence of the master frame pulse, to correspond to the word on the bus 102 and thereafter is incremented with each occurrence of a clock pulse. An output 104 of the counter 103 is decoded by a decoder 105 which generates a reset signal on a lead 106 with each occurrence of a count of 19 in the counter 103. Thus with the occurrence of the next clock pulse, the counter 103 is reset to a count of zero. Thus a modulo 20 counting function is provided, which is phased as is illustrated in table 1.

**TABLE 3**

| CIRCUIT SWITCH MODULE | ID3 | ID2 | ID1 | ID0 | PRESET VALUE OF BUS 102 | TDM-11 FRAME AND TIME SLOT CORRESPONDENCE | TDM-21 FRAME AND TIME SLOT CORRESPONDENCE |
|---|---|---|---|---|---|---|---|
| 0 | 0 | 0 | 0 | 0 | 18 | 0 | 2 |
| 1 | 0 | 0 | 0 | 1 | 17 | 1 | 3 |
| 2 | 0 | 0 | 1 | 0 | 14 | 4 | 6 |
| 3 | 0 | 0 | 1 | 1 | 13 | 5 | 7 |
| 4 | 0 | 1 | 0 | 0 | 10 | 8 | 10 |
| 5 | 0 | 1 | 0 | 1 | 9 | 9 | 11 |
| 6 | 0 | 1 | 1 | 0 | 6 | 12 | 14 |
| 7 | 0 | 1 | 1 | 1 | 5 | 13 | 15 |
| 8 | 1 | 0 | 0 | 0 | 2 | 16 | 18 |

In accordance with the table, for example for the circuit switch module 0, the channel zero on the serial TDM path 11 is inserted onto the parallel TDM bus 10 in time slot zero, channel one in time slot 20 and so on until the last channel, channel 31, of a serial TDM frame is inserted into time slot 620.

Stated in other terms, each TDM path has 32 parallel ten bit receiving channels assigned to it on the primary bus 10, and each of these channels is separated from the other by 19 other channel occurrences.

The decoder 105 also generates an SM0 timing pulse, coincident with the count of 19 occurring in the counter 103. A shift register 109 responds to the SM0 timing pulse and the clock pulses to generate additional timing pulses SM1-SM10 as illustrated in figure 4.

Referring to figure 6, the time slot occurrences on the parallel TDM bus 10 are tracked by a parallel slot counter which includes a modulo 20 counter 111 and a modulo 32 counter 112. The counter 111 responds to the 5.12 MHz clock pulses to provide repetitive counts of 0 through 19 on five time slot count leads TSC 0-4. The counter 112 is incremented with each reset occurrence in the counter 111 to provide repetitive counts of 0 through 31 on five time block count leads TBC 0-4, whereby in combination binary signals on the TSC and TBC leads define 640 parallel time slot addresses per frame. A serial channel counter function is provided by a counter 113 which provides 32 channel counter addresses on serial channel count leads SCC 0-4 to define channel occurrences in the serial TDM paths 11 and 21. The counter 113 is incremented with each time block occurrence as indicated by the timing pulse SM6. All of the counters 111, 112 and 113 are reset with each occurrence of the master frame pulse.

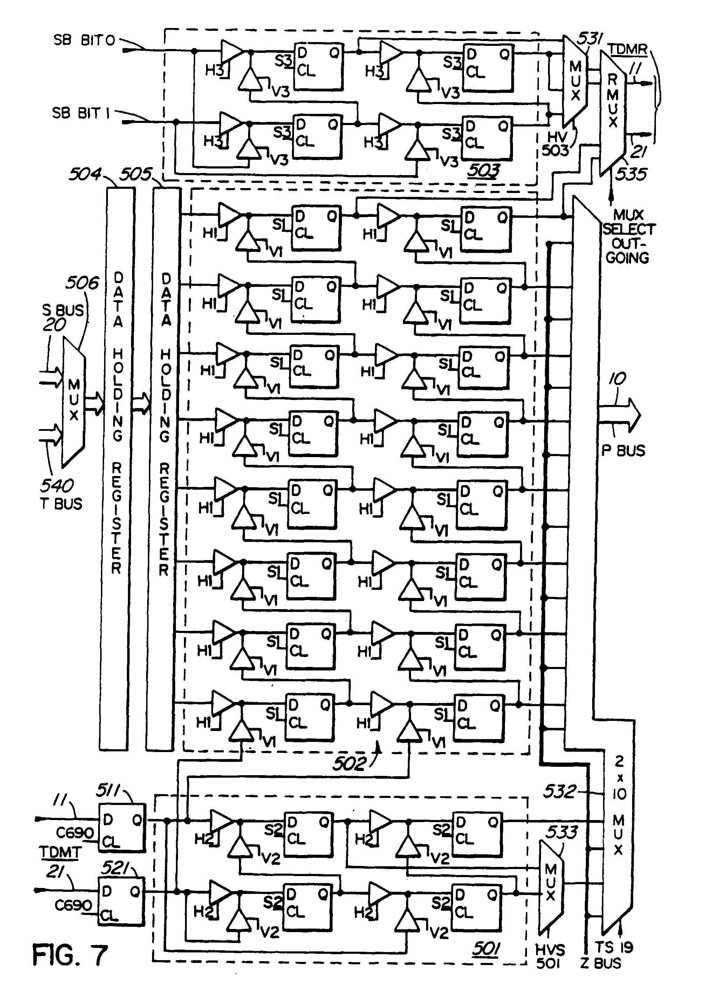

The converter circuit illustrated in figure 7 resides within the circuit switch module 100 and performs both serial to parallel conversions and parallel to serial conversions for each of the 64 TDMT and the 64 TDMR channels on the TDM paths 11 and 21. As before mentioned, the TDMT channels are incoming and carry data or voice, plus signalling bits originating at the terminal instruments, while the corresponding TDMR channels are outgoing, each to the originating terminal instrument. Each incoming time slot includes 10 binary bits which are converted directly to parallel form and asserted during the predetermined time slot interval on the primary bus 10. Each outgoing time slot includes 10 binary bits which are obtained from one of two sources: one source being a corresponding time slot interval on the secondary bus 20; the other source being 8 bits from any time slot interval on the primary bus 10, the 8 bits having traversed the time switch, plus 2 bits from the time slot interval on the secondary bus 20 corresponding to the TDMR channel occurrence.

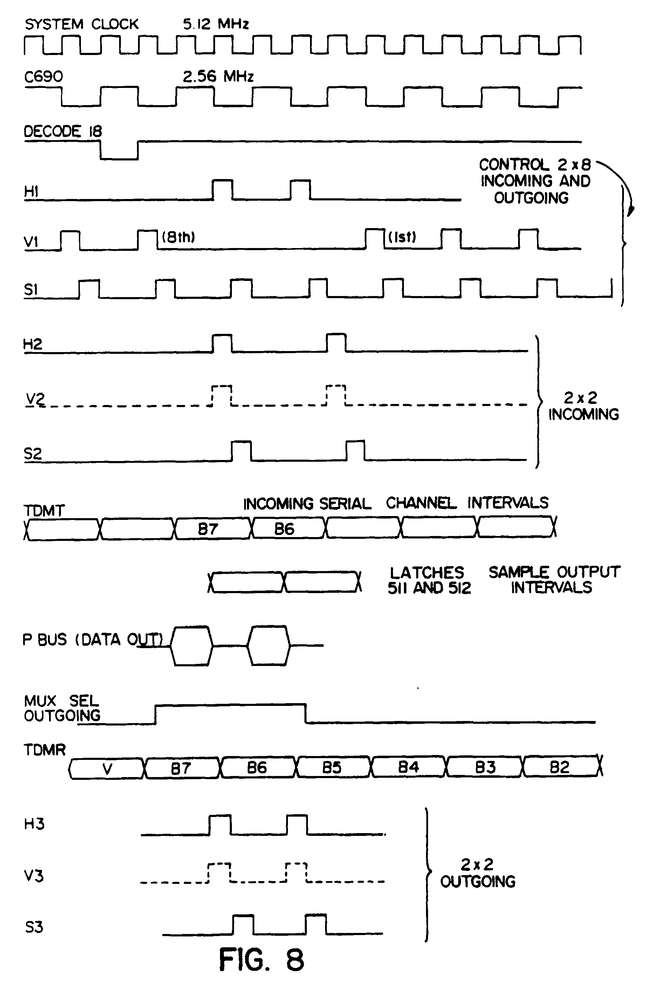

The converter circuit is discussed in more detail with reference to the timing signals illustrated in figure 8. A SYSTEM CLOCK waveform shown at the top of figure 8, and some of the other waveforms in figure 8 are idealistically depicted for convenience as having vertical rise and fall portions. Actually, in practice these waveforms have sloped rise and fall portions similar to those waveforms illustrated in figure 4, which are more realistically depicted. The converter circuit, in figure 7, includes three orthogonal shift registers shown at 501, 502 and 503 respectively. These three registers perform the required serial to parallel, and parallel to serial conversions. Each of the orthoganal shift registers 501, 502 and 503 is associated with a clock generator, not shown, which produces non-overlapping timing signals, illustrated in figure 8, for shifting and directional control. Vertical directional control signals V1, V2 and V3 are used to vertically direct shift functions of the register 502, 501 and 503 respectively. Horizontal directional control signals H1, H2 and H3 are used to horizontally direct shift functions of the registers 502, 501 and 503. The actual loading of D type flip flop elements in the registers 502, 501 and 503 is clocked by signal pulses S1, S2 and S3. The control signals V2 and V3 are shown in broken line to indicate that these signal pulses are 20 system clock periods removed from the adjacent H2 and H3 signal pulses, such that each commences at 40 system clock intervals.Bits of the TDMR serial bit streams are timed to be coincident with the rising edges of a serial digital loop clock signal C690. Bits of the TDMT serial bit streams on the paths 11 and 21 are sampled and re-timed to likewise be co-incident, by latches 511 and 521. A half cycle of the system clock prior to the rising edge of the serial digital loop clock signal C690, contents of the (2 by 8) outgoing register 502 are selected by a receive multiplexor 535 to provide the first bits of each of the TDMR channels at 11 and 21. The receive multiplexor selection is in response to a MUX SEL OUTGOING control signal shown in figure 6. The outgoing bits are timed by the rising edge of the clock signal C690 to start transmission of a 10 bit time slot. Shortly thereafter, the starting bits of the corresponding TDMT channels are sampled by the latches 511 and 521 using the falling edge of the same clock signal C690. The sampled bits are then applied to the (2 by 2) incoming register 501. During the said same clock signal C690, contents of the register 502 and the incoming register 501 are asserted in parallel by a multiplexor 532 on the leads of the primary bus 10. Only in an instance of a time slot (TS) 19 occurrence, which is indicated by a rising edge of a decode 18, in Figure 6, will the multiplexor 532 gate Z bus signal states to the P bus 10. A half cycle of the same system clock signal after the falling edge of the said same C690 clock signal, the three orthogonal registers 501, 502 and 503 are clocked, resulting in the incoming register 501 accepting said starting bits, the outgoing register 503 moving the second outgoing bit to the multiplexor 535, and the register 502 moving 8 bits of the TDMT path 21 toward the multiplexor 532. At the same time the incoming register 501 moves the remaining two bits toward the multiplexor 532 via a multiplexor 533. The next two outgoing parallel information bytes are moved through data holding registers 504 and 505, under control of timing signals SM2 and SM6 and hence, into the register 502. At the same moment, as before described, the register 501 stores the first two bits of each incoming TDMT channel. Once the first two bits have occurred, the registers 501 and 503 receive no further clock signals until the start of the next outgoing time slot sequence when all 10 registered bits are shifted in parallel toward the P bus 10.

At the start of the next time slot sequence, registers 501 and 503 are caused to move their respective contents (2 bits) vertically, that is upwardly in figure 5. Thereafter the next eight TDMT bits are shifted vertically into the register 502 and the previous contents are likewise shifted out to be transmitted via the multiplexor 535 and the TDMR paths 11 and 21. The horizontal directional control signals and the vertical directional control signals continue to be alternately asserted thereby repeating the parallel to the serial and serial to parallel cycle for each TDM channel on TDM paths 11 and 21.

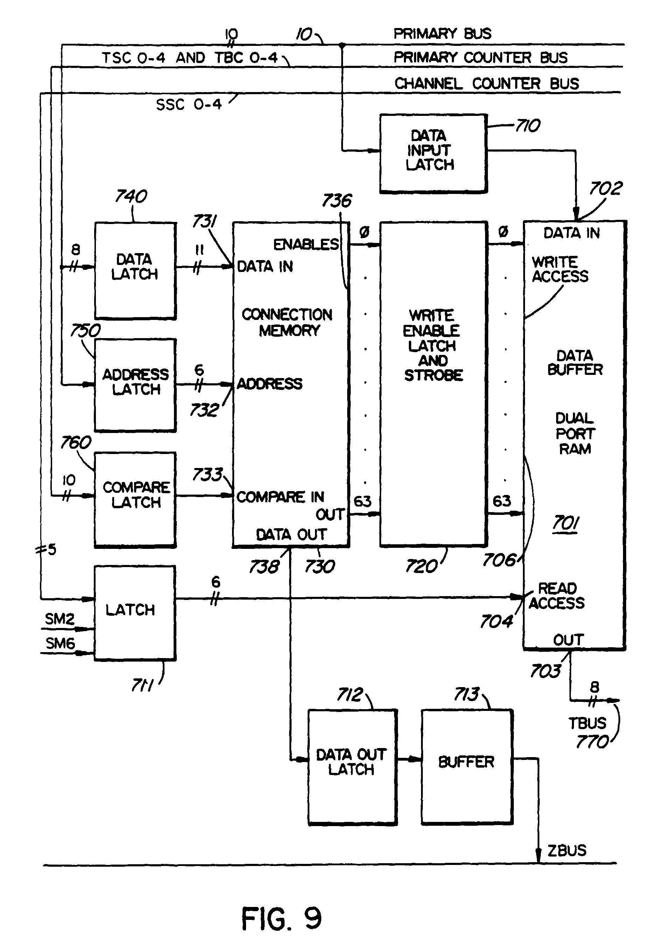

The time switch circuit in figure 9 provides for a timely transfer of 8 information bits from one of the 640 time slots on the primary bus 10 to a parallel T bus input of the parallel input multiplexor 506 of the converter circuit in figure 7, and thereby ultimately to a TDM path (11 or 21) time slot, as directed by the central processor 7. The information bits of each time slot on the P bus 10 are momentarily captured by a data input latch circuit 710 and thereafter applied at an input 702 of a dual port random access memory (RAM) 701. The dual port RAM 701 includes an output 703 which drives a T bus 770 in response to a six bit address applied at a read access address port 704. The RAM 701 differs from a typical dual port memory device in that for the purpose of storing information received at its input 702, it does not include the typical address decode circuitry. Instead, each write address is decoded and applied to an individual one of 64 write enable leads at 706. The decoded write address is timed via a write enable latch and strobe circuit 720. Any number of the write enable leads may be asserted by the circuit 720 simultaneously. The dual port RAM 701 responds, to a signal assertion or signal assertions on any or all of its 64 write enable leads at 706, by storing the signal states of said 8 information bits at the corresponding memory location or locations as the case may be. For example, if none of the leads at 706 is asserted, no storage locations are written. If one or more of the leads at 706 is asserted, the one or more corresponding storage locations are written. Reading of the 64 dual port storage location occurs sequentially on a regular and periodic basis, under the control of a flip flop, not shown, in the latch 711 which is toggled by signals SM2 and SM6, and the 32 sequentially generated TDM channel addresses which are generated by the counter 113 in figure 6.

A connection memory 730 contains information as to the actual time slots of the 640 P bus 10 time slots from whence information bit states are stored in the dual port RAM 701. The connection memory 730 is provided by a content addressable memory which includes an eleven bit data input port 731, a six bit address port 732 and a 10 bit compare address port 733. The general structure and operation of content addressable memories is known. In this example P bus addresses, from whence information is to be stored, are lodged in memory locations in the connection memory 730. Each of 64 memory locations, not shown, correspond with a separate one of 64 output leads at 736. A digital comparitor, not shown, is associated with each of the 64 memory locations such that addresses appearing at the compare port 733 are each compared with the information stored at each of the 64 memory locations. In every instant where the address at the compare port 733 and the information at a memory location is the same and the memory location also includes an asserted validity bit, the corresponding one of the 64 output leads at 736 is asserted. The asserted state is eventually transferred via the circuit 720 to the dual port RAM 701, which responds as previously described.

Operation of the circuit switch modules 100 is directed by the central processor 7, which uses the interface circuit 8 and 32 dedicated time slots on the P bus 10 for lodging information into the memory locations of the connection memory 730 via a data latch circuit 740 and an address latch circuit 750. The information is delivered from the interface circuit 8 in the form of four bytes each of which occupies time slot 19 of 4 sequentially occurring time blocks on the P bus 10. The four bytes include a command byte, followed by an address byte, a low order data byte, and a higher order data byte. Each of these bytes is asserted along with a validity signal on one of the two remaining leads of the P bus 10 which indicates that the bytes are in fact an instruction from the central processor 7. A portion of the command byte specifies either a write or a read function intended for one of a connection memory, a source connection memory or a destination connection memory. A comparitor responds to the validity signal and a match between a remaining portion of the command byte and the IDO-3 by causing the address latch to store the next byte, that is the address byte. Thereafter the data latch 740, in figure 9, captures 11 bit states of the low and higher order bytes, which are subsequently stored in the memory location of the connection memory 730 as indicated by six address bits asserted by the address latch 750. Provision is also made for the central processor 7 to confirm the information content of any address in the connection memory. In this case the command byte indicates the read function, and the address byte indicates the memory location to be read. The subsequent low and higher order bytes are driven by the stored information from a data output 738 of the connection memory 730 and via an output latch 712 and buffer 713 to the Z bus and thence via the multiplexor 532 in figure 7 onto the P bus 10 where it is picked up by the interface circuit 8.

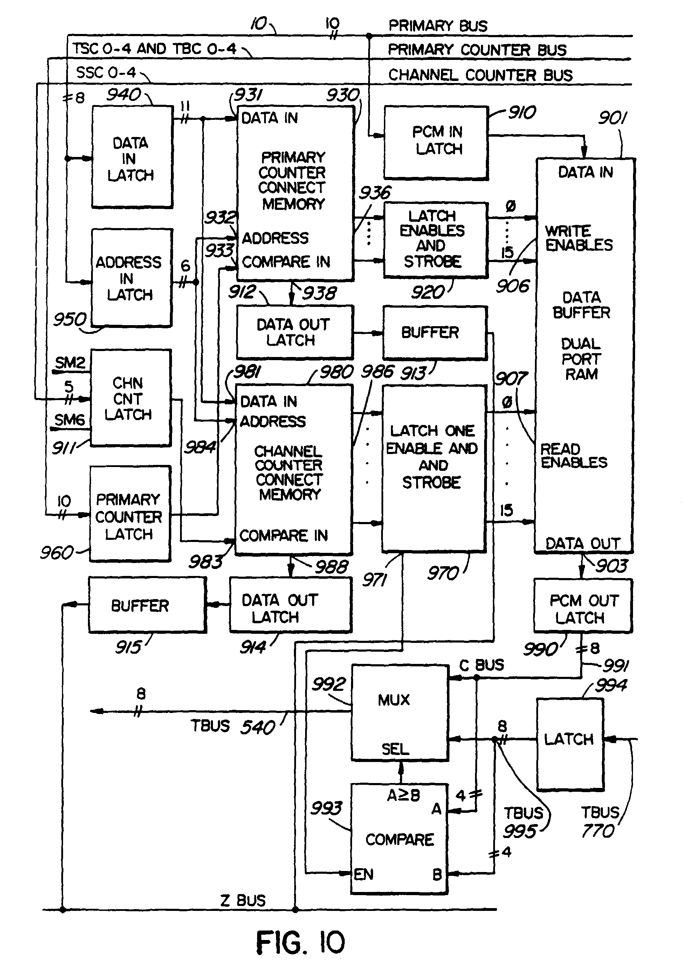

The time switch conference circuit in figure 10 provides a three party conference feature in the digital key telephone system. The time switch conference circuit adds an ability for a timely transfer of 8 information bits from another of the 640 time slots on the P bus 10, ultimately to, for example, said TDM path time slot previously referred to at the beginning of the discussion of figure 9. Very briefly by way of introduction, bytes are presented to a multiplexor 992, in figure 10, via the T buses 770 output from figure 9 and via a conference C bus 991. The four most significant bit (not including the sign bits) of each byte are compared in a comparitor 993 which directs the multiplexor 992 to assert the 8 bits from the C bus 991 on the T bus 540 in the event that the value of the 4 bits from the C bus 991 is equal or greater than a value of the 4 bits from the T bus 995. In the event the T bus 995 value is greater, then the 8 bits from the T bus 995 are asserted on the T bus 540 by the multiplexor 992. Thus a three party conference call may be implemented wherein each party hears only the instant loudest speaking party of the other two parties.

Considering the time switch conference circuit of figure 10 in more detail, the information bits of each time slot on the P bus 10 are momentarily captured by a PCM input latch 910 and thereafter applied at an input 902 of a dual port RAM 901. The dual port RAM 901 includes an output 903 which is buffered to the C bus 991 via a PCM output latch circuit 990. Likewise the T bus 770 is buffered to the T bus 995 via a latch circuit 994. The dual port RAM 901 differs from the dual port RAM 701 in that it has only 16 memory locations and lacks typical address decode circuitry for the purpose of reading out information stored at these memory locations. Each write address is decoded and applied to an individual one of 16 write enable leads at 906 and likewise each read address is decoded and applied at an individual one of 16 read enable leads at 907. The decoded write address is timed via a write enable latch and strobe circuit 920. Likewise the decoded read address is timed via a read enable latch and strobe circuit 970. The read enable latch and strobe circuit 970 also includes an EXCLUSIVE OR logic circuit not shown, which responds to a single decoded read address occurrence by asserting a compare enable signal on a lead 971. The compare enable signal is used to activate the selection function of the comparitor circuit 993, which in the absence of the compare enable signal causes the multiplexor 992 to assert the T bus 995 bit states onto the T bus 540, exclusively. Hence if no decoded read address or more than one decoded read address is asserted at inputs of the read enable latch and strobe circuit 970, the conference function does not occur. The dual port RAM 901 responds, to a signal assertion on a write enable lead at 906, by storing the signal states of said 8 information bits at the corresponding memory location. Likewise, reading of a memory location in the dual port RAM 901 occurs in response to a corresponding read enable lead at 907 being asserted.

A source connection memory 930 contains information as to the actual P bus time slots from whence information bit states are stored in the dual port RAM 901. The source connection memory 930 is provided by a content addressable memory having 16 memory locations, not shown, each corresponding to a separate one of 16 output leads at 936. The source connection memory 930 includes an eleven bit data port 931, a six bit address port 932 and a ten bit compare address port 933. A digital comparitor, not shown, is associated with each of the 16 memory locations such that addresses appearing at the compare port 933 are each compared with the information stored at each of the 16 memory locations. In an instant where the address at the compare port 933 and the information at a memory location are the same and the memory location also includes an asserted validity bit, the corresponding one of the 16 output leads at 936 is asserted. The asserted state represents a decoded write address, which is subsequently transferred via the circuit 920 to the dual port RAM 901 which responds as previously described.

A destination connection memory 980 contains information as to the actual TDMR time slots on the TDM paths 11 and 21 to which information bit states stored in the dual port RAM 901 may be directed via the multiplexor 992 and the T bus 540. The destination connection memory 980 is of a structure similar to that of the previously described source connection memory 930. Addresses appearing at a compare port 983 are each compared with information stored at each of 16 memory locations. In an instant where the information at the compare port 983 and the information at a memory location are the same and the memory location also includes an asserted validity bit, a corresponding one of 16 output leads at 986 is asserted. The EXCLUSIVE OR logic circuit in the read enable latch and strobe circuit 970 permits the corresponding read enable lead at 907 to be asserted, which causes the dual port RAM 901 to read out the 8 information bit states from the corresponding memory location as previously described.

The information appearing at the compare port 983 is asserted from the channel counter bus leads SSC 0-4 by a channel counter latch circuit 911. The latch circuit 911 also includes a flip flop, not shown, which is toggled by the timing signals SM2 and SM6 and thereby provides 64 addresses per frame, similar to that previously discussed in relation to the latch circuit 711.

Operation of the conference function in the digital key telephone system is directed by the central processor 7, which uses the interface circuit 8 to communicate with the 32 dedicated time slots on the P bus 10 for lodging information into the memory locations of the source connection memory 930 and the destination connection memory 980 via a data latch circuit 940 and an address latch 950 in a manner similar to that previously discussed in relation to the connection memory 730. Likewise the central processor 7 may confirm the information content of the source connection memory 930 by way of a data output 938, a data output latch circuit 912, a buffer circuit 913 and the Z bus, connected as shown in figure 8. Information content of the destination connection memory is also available to the central processor 7 by way of a data output 988, a data output latch circuit 914, a buffer circuit 915, and the Z bus, connected as shown in figure 10.

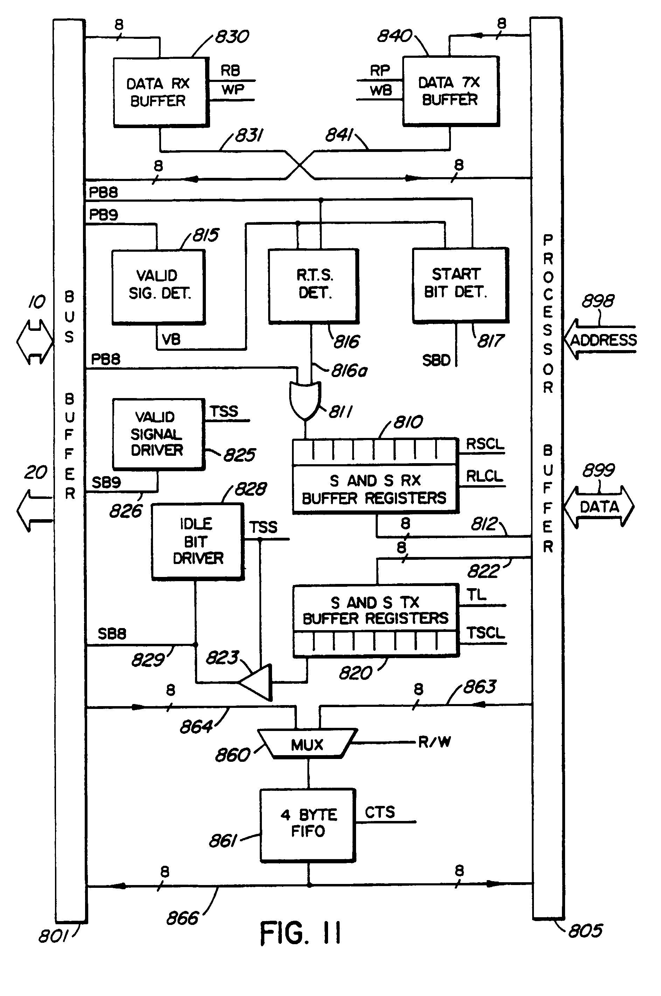

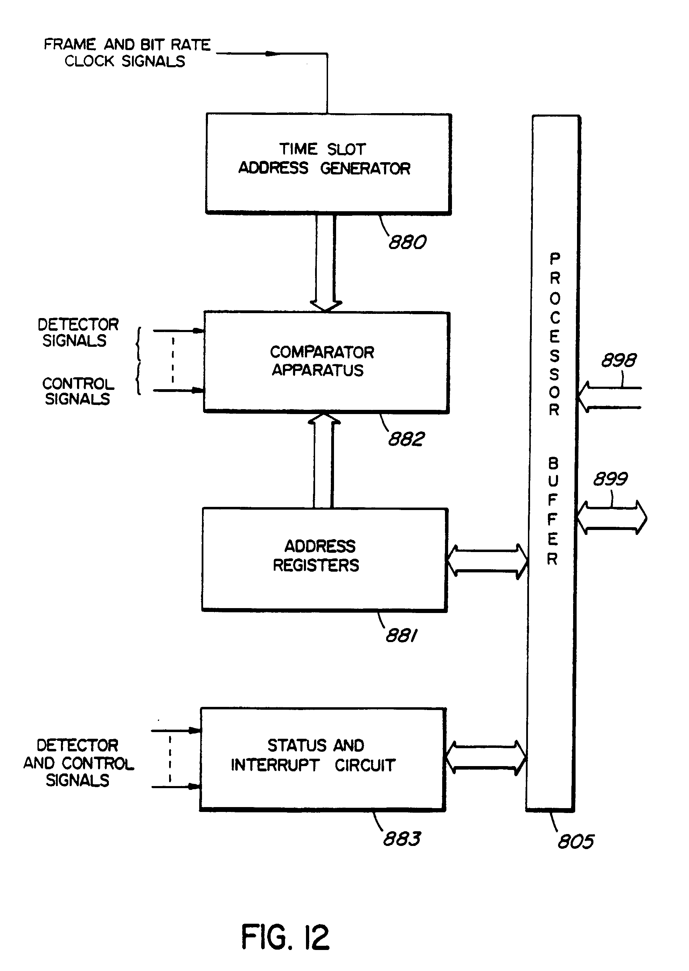

A primary function of the interface circuit 7, as illustrated in figures 11 and 12, is that of receiving S and S messages and distributing S and S messages. The S and S messages are received from the primary bus 10 in one port related time slot at any one time by S and S receive buffer registers 810. The S and S messages are transmitted to all of the secondary bus 20 time slots or to a selected one of the secondary bus 20 time slots by S and S transmit buffer registers 820. The S and S messages are physically coupled with the primary and secondary buses 10 and 20 by a bus buffer circuit 801. The interface circuit is similarly coupled to central processor address and data buses, at 898 and 899, by a processor buffer 805. A primary function of the buffers 801 and 805 is that of relaying signals between all of various potential signal sources and destinations while minimizing the actual number of receiving gates and driving gates physically attached to the buses and various unillustrated timing and control leads. Provision of such buffers is usual in digital electronic systems and does not warrant detailed discussion.

Another primary function of the interface circuit is that of capturing requests to send (RTS) an S and S message. As before described, an RTS occurrence is marked by 'zero' occurrences in bit positions 8 and 9 in a time slot. A valid signal detector receives each bit 9 time slot state and detects and latches the 'one' state for a short time. A request to send detector 816 likewise receives each bit 8 time slot state. If the valid signal detector 815 is unlatched and the bit 8 state is 'zero', the RTS detector 816 asserts a request to send signal indication on an RTS lead 816a. If the request to send is from within a selected group of time slots, a receive shift clock (RSCL) causes a shift register portion of the buffer registers 810 to shift the RTS indication into the buffer register 818. After sixteen RSCL pulses, a receive load clock (RLCL) causes the contents of an intermediate two byte shift register to be transferred to a two byte output register. The contents of the output byte register are available at the processor buffer 805 via an S and S message bus 812. Thus the registers 818 are clocked to monitor a group of 16 specified ports in the key telephone system for RTS occurrences. An occurrence of an RTS during any input from any of the 16 specified ports is arranged to generate a low level interrupt to alert the central processor to the presence of information. However, as it is intended that each port connected apparatus will continuously RTS until a clear to send (CTS) is received by it, there is no particular urgency attached to any one RTS occurrence. Eventually, the central processor will specify transmittal of an appropriate CTS and simultaneously select the port related time slot as a source of an expected S and S message.

When a CTS message is detected in the intended station apparatus a response, in the form of at least a one byte message, is transmitted. The first bit of the message is a 'one' in the bit 8 position and a valid 'one' in the bit 9 position. This combination causes a start bit detector 817 to raise a start bit (SB) signal for the duration of subsequent uninterrupted valid signal detection occurrences, coincident with the selected time slot. In the presence of the SB signal, RSCL pulses (one per frame) cause bit 8 states of the selected time slots to be shifted into the S and S receive buffer registers 810. Interrupt signals are generated with every byte so collected, such that the central processor is able to receive and if necessary, internally encue the incoming S and S message.

Outgoing S and S messages are received from the processor buffer 805 via a bus 822 as timed by transmit load (TL) pulses. A shift register in the register 820 shifts received bytes, bit by bit toward the bus buffer 801 at a rate of one bit per frame in response to transmit shift clock (TSCL) pulses. The state of the output stage of the shift register is continuously applied to a transmission gate 823. The transmission gate 823, and an idle bit driver are both responsive to a time slot select (TSS) signal for this operation. In the case of an F message, the TSS is asserted throughout the length of the message continuously, frame after frame. In the case of an S message, the TSS is asserted for the duration of the time slot associated with the destination port of the S message. The idle bit driver asserts a 'one' on the lead 829 when the TSS is not asserted. A valid signal driver 825 responds to the TSS assertion by asserting a 'one' on a lead 826, whereby S and S bit assertion on the lead 829 are accompanied by valid signal bit assertion on the lead 826.

Another capability of the interface circuit 8 is that of providing wide band data paths between any of the port associated 64 Kbs channels and the central processor 7. Input is received from any specified channel via a data receive buffer 830 under the control of a read bus (RB) strobe, which is generated coincident with occurrence of a primary bus time slot from which receiving is required. This occurrence preferably raises a high level interrupt which is intended to result in a write to processor (WP) strobe being generated to provide the buffered byte on a bus 831 for use by the central processor 7. In like manner, bytes of information are transferred from the central processor 7, via a data transmit buffer 840 to a bus 841, for assertion during a predetermined time slot on the primary bus 10.

Although the buffers 830 and 840 provide a convenient data transport interface, this type of interface can be unduly time consuming if such transfers are to occur frequently. For example, frequent data transfers are required between the switch modules 100 and the central processor 7, in order to exercise prompt control of communication paths in the key telephone system. Hence, a more specialized interface is provided which operates throughout the 32 time slots on the primary bus 10, which are dedicated to exclusive use by the central processor 7, as previously described. Connection instruction bytes are loaded from a bus 863 to a four byte FIFO 861 via a multiplexor 860 in the presence of a write (W) signal. After the FIFO 861 has received four bytes, the central processor 7 must direct the interface circuit to initiate transfer of data to the circuit switch 100 via a bus 866 and the primary bus 10. The interface circuit asserts the bits states appearing at the FIFO output onto the primary bus 10 with each occurrence of a dedicated control time slot. If no information transfer is required, an idle code is asserted on the bus 863 and therefore is subsequently asserted on the bus 866. By this means, up to 32 bytes of connection instruction can be transferred via the primary bus during each frame. Up to 16 bytes of query and 16 bytes of response information may be exchanged via the primary bus 10 by loading the FIFO with a 2 byte query message.

Functional circuit blocks in figure 12 interface with the central processor 7 via the same processor buffer 805, shown in figure 11. In figure 12, a time slot address generator 880 similar to that discussed in relation to figure 5 provides definition of time slot interval occurrences on the primary and secondary buses for the interface circuit 8. Particularly, address registers 881 are selectively loaded via the buffer 805 from the central processor 7 to define; those time slots which are watched for RTS, that time slot which is granted S and S message transmission to S and S receive buffer registers 810; and the time slot selected for single channel transmission of an S and S STIMULUS message or a CTS message.

In operation, a comparator apparatus 882 monitors the contents of the address registers 881 and the time slot address occurrences from the generator 880. Occurrences of matches, in combination with instruction of central processor origin and signals from the detectors 815-817, are used to generate the controlling signals in sequence and with timing as previously discussed in relation to figure 11. A status and interrupt circuit 883, monitors the progress of S and S message transfer, data byte transfers, and control byte transfers, with reference to signals of detector and control origin, to generate timely interrupt signals whereby the central processor is informed of information exchange opportunities and requirements.

## Claims

1. A key telephone system for providing digital signal communications between a plurality of ports (19) via a switching means (100), each port (19) being for the connection of a respective station apparatus (13-17), a communications path (11) being connected between the switching means (100) and the plurality of ports (19), and operation of the switching means (100) being directed by a central processor (7), characterised by:
the communications path (11) being operable to provide n pairs of time division multiplex transmit (TDMT) and time division multiplex receive (TDMR) channels, each channel including a plurality of bit positions for carrying information originating with and destined for a user of a station apparatus, at least one TDMT, TDMR channel pair being exclusively associated with each port, and each said TDMT channel and TDMR channel including a signalling and supervision (S and S) bit position for carrying signalling and supervision originating at and destined for the station apparatus;
the switching means (100) being operable to couple communications signals between bit positions of selected ones of the TDMT channels and bit positions of selected ones of the TDMR channels, excluding said S and S bit positions, as directed by the central processor; and
an interface means (8) for transferring information from the said S and S bit position of a selected TDMT channel to the central processor (7) and for transferring information from the central processor to the S and S bit position of at least one of the TDMR channels, independently of communications paths provided by the switching means.

2. A method of operating a key telephone system for providing digital signal communications between a plurality of ports (19) via a switching means (100), each port (19) being for the connection of a respective station apparatus (13-17), a communications path (11) being connected between the switching means (100) and the plurality of ports (19), wherein operation of the switching means is directed by a central processor (7), each of said station apparatus having a processing device for controlling functions of the station apparatus in response to a key control action of a user origin and in response to messages received from the central processor, the method being characterised by the steps of:
(a) providing at least one bidirectional time division multiplex (TDMT, TDMR) channel in association with each station apparatus, via the communications path (11) and at least one time division multiplex message channel (S and S) in association with each station apparatus, via the communications path (11);
(b) coupling the time division multiplex message channels in the communication path to the central processor by routinely selecting one of said station apparatus after another for transmission of a message via its associated message channel;
(c) in response to a call-set up request from a selected calling station apparatus exchanging call set up messages between the central processor, the calling station apparatus and a called station apparatus, via their associated time division multiplex message channels in the communication path; and
(d) in response to a predetermined message from the called station apparatus via the switching means, synchronously exchanging information between the bidirectional time division multiplex channels associated with the calling and called station apparatus.

3. A method as claimed in claim 2 characterised in that each port is provided with at least one bidirectional time division multiplex channel and at least one time division message channel, the operation of the key telephone system being adapted to be automatically responsive to any of said station apparatus after said station apparatus is connected at one of the ports.

4. A method as claimed in claim 2 or claim 3, characterised in that each message exchange referred to in step (c) occurs in a predetermined one of a plurality of message protocols.

5. A method as claimed in claim 4 wherein the message protocols include a stimulus message protocol and a functional message protocol, the method comprising the further steps of:
(e) in the central processor (7), generating stimulus messages and functional messages;
(f) transmitting each of said stimulus messages via a message channel associated with an apparatus for which the stimulus message is destined;
(g) transmitting each of said functional messages via a plurality of message channels, at least one of which is associated with an apparatus to which the functional message is addressed.

6. A method as claimed in claim 5, wherein each station apparatus is one of a functional station apparatus (51) and a stimulus station apparatus (16), the functional station apparatus being exclusively responsive to messages in the functional message protocol and the stimulus station apparatus being exclusively responsive to messages in the stimulus message protocol, the method being further characterised by the steps of:
(h) emulating a functional station apparatus (45, 46) on behalf of each stimulus station apparatus (61, 62) connected to the telephone system;
(i) exchanging signalling and supervision (S and S) messages of the stimulus message protocol exclusively between step (h) and a calling or called one of the stimulus station apparatus;
(j) relaying an incoming signalling and supervision message of the functional message protocol to each of the station apparatus with an exception being that of performing step (h) on behalf of a stimulus station apparatus for which said functional message protocol signalling and supervision message includes information.

7. A method as claimed in claim 6 wherein said stimulus station apparatus is responsive solely to signalling and supervision messages characterised by a predetermined stimulus message protocol bit pattern.

8. A method as claimed in claim 7 wherein step (h) is invoked in response to an incoming signalling and supervision message characterised by the predetermined stimulus message protocol bit pattern.

9. A method as claimed in claim 5, wherein each station apparatus is exclusively compatible with one of the stimulus and functional message protocols, the method being further characterised by the steps of:
(h) emulating a functional station apparatus (45, 46) on behalf of each stimulus terminal apparatus (61, 62) connected to the telephone system;
(i) exchanging signalling and supervision messages of the stimulus message protocol exclusively between step (h) and a calling or called one of the stimulus station apparatus;
(j) relaying an incoming signalling and supervision message of the functional message protocol to each of the station apparatus with an exception being that of performing step (h) on behalf of a stimulus station apparatus for which said functional message protocol signalling and supervision message includes information.

## Patentansprüche

1. Tastentelefonsystem zur Schaffung von digitalen Nachrichtensignalübertragungen zwischen einer Vielzahl von Anschlüssen (19) über eine Vermittlungseinrichtung (100), wobei jeder Anschluß (19) zur Verbindung mit einem jeweiligen Stationsgerät (13 -17) dient und ein Nachrichtenübertragungspfad zwischen der Vermittlungseinrichtung (100) und der Vielzahl von Anschlüssen (19) eingeschaltet ist und wobei der Betrieb der Vermittlungseinrichtung durch einen Zentralprozessor (7) gelenkt wird,
dadurch gekennzeichnet, daß
der Nachrichtenübertragungspfad (11) zur Schaffung von n-Paaren von Zeitmultiplex-Sende-(TDMT-) und Zeitmultiplex-Empfangs-(TDMR-) Kanälen ausgebildet ist, wobei jeder Kanal eine Vielzahl von Bit-Positionen zum Übertragen von Informationen, die von dem Benutzer eines Stationsgerätes ausgehen oder für diesen bestimmt sind, einschließt und jedem Anschluß zumindest ein TDMT-, TDMR- Kanalpaar ausschließlich zugeordnet ist, und wobei jeder dieser TDMT-Kanäle und TDMR-Kanäle eine Signalisierungs- und Überwachungs-(S- und S)-Bitposition zur Übertragung von von dem Stationsgerät ausgehenden und für dieses bestimmte Signalisierungs- und Überwachungsinformationen einschließt,
die Vermittlungseinrichtung (100) zur Kopplung von Nachrichtenübertragungssignalen zwischen Bitpositionen ausgewählter TDMT-Kanäle und Bitpositionen ausgewählter TDMR-Kanäle unter Ausschluß der S- und S-Bitpositionen unter der Steuerung durch den Zentralprozessor betreibbar ist, und
eine Interfaceeinrichtung (8) zur Überführung von Informationen von der S-und S-Bitposition eines ausgewählten TDMT-Kanals zum Zentralprozessor (7) und zur Überführung von Informationen von dem Zentralprozessor an die S-und S-Bitposition von zumindestens einem der TDMR-Kanäle unabhängig von den Nachrichtenübertragungspfaden vorgesehen ist, die durch die Vermittlungseinrichtung gebildet werden.

2. Verfahren zum Betrieb eines Tastentelefonsystems zur Schaffung digitaler Nachrichtensignalübertragungen zwischen einer Vielzahl von Anschlüssen (19) über eine Vermittlungseinrichtung (100), wobei jeder Anschluß (19) für die Verbindung mit einem jeweiligen Stationsgerät (13 - 17) vorgesehen ist und ein Nachrichtenübertragungspfad (11) zwischen der Vermittlungseinrichtung (100) und der Vielzahl von Anschlüssen (19) angeschaltet ist, bei dem die Betriebsweise der Vermittlungseintung durch einen Zentralprozessor (7) gelenkt wird und jedes der Stationsgeräte eine Verarbeitungseinrichtung zur Steuerung von Funktionen des Stationsgerätes in Abhängigkeit von einem Tastenbetätigungsvorgang durch einen Benutzer und in Abhängigkeit von von dem Zentralprozessor empfangenen Mitteilungen aufweist, wobei das Verfahren durch die folgenden Schritte gekennzeichnet ist:
(a) Schaffung zumindest eines bidirektionalen Zeitmultiplexkanals (TDMT-, TDMR-Kanal) in Zuordnung zu jedem Stationsgerät über den Nachrichtenübertragungspfad (11) und zumindest eines Zeitmultiplex-Mitteilungskanals (S-und S-Kanal) in Zuordnung zu jedem Stationsgerät über den Nachrichtenübertragungspfad (11),
(b) Koppeln der Zeitmultiplex-Mitteilungskanäle in dem Nachrichtenübertragungspfad an den Zentralprozessor durch routinemäßiges Auswählen der Stationsgeräte eines nach dem anderen zur Übertragung einer Mitteilung über seinen zugeordneten Mitteilungskanal,
(c) in Abhängigkeit von einer Rufaufbau-Anforderung von einem ausgewählten anrufenden Staionsgerät, Austauschen von Rufaufbau-Mitteilungen zwischen dem Zentralprozessor, dem anrufenden Stationsgerät und einem angerufen Stationsgerät über ihre zugehörigen Zeitmultiplex-Mitteilungskanäle in dem Nachrichtenübertragungspfad, und
(d) in Abhängigkeit von einer vorgegeben Mitteilung von dem angerufenen Stationsgerät, synchrones Austauschen von Informationen zwischen den bidirektionalen Zeitmultiplexkanälen, die den anrufenden und angerufenen Stationsgeräten zugeordnet sind.

3. Verfahren nach Anspruch 2, dadurch gekennzeichnet, daß jeder Anschluß mit zumindestens einem bidirektionalen Zeitmultiplexkanal und zumindestens einem Zeitmultiplex-Mitteilungskanal versehen ist, wobei die Betriebsweise des Tastentelefonsystems so ausgebildet ist, daß sie automatisch auf irgendeines der Stationsgeräte anspricht, nachdem dieses Stationsgerät an einen der Anschlüsse angeschlossen ist.

4. Verfahren nach Anspruch 2 oder 3, dadurch gekennzeichnet, daß jeder im Schritt (c) bezeichnete Mitteilungsaustausch in einem vorgegebenen einer Vielzahl von Mitteilungsprotokollen erfolgt.

5. Verfahren nach Anspruch 4, bei dem die Mitteilungsprotokolle ein Stimulus-Mitteilungsprotokoll und eine Functional-Mitteilungsprotokoll einschließen, wobei das Verfahren die folgenden weiteren Schritte umfaßt:
(e) Erzeugung von Stimulus-Mitteilungen und Functional-Mitteilungen in dem Zentralprozesor (7),
(f) Übertragung jeder der Stimulus-Miteilungen über einen Mitteilungskanal, der einem Gerät zugeordnet ist, für das die Stimulus-Mitteilung bestimmt ist,
(g) Übertragung jeder der Functional-Mitteilungen über eine Vielzahl von Mitteilungskanälen, von denen zumindest einer einem Gerät zugeordnet ist, an das die Functional-Mitteilung adressiert ist.

6. Verfahren nach Anspruch 5, bei dem jedes Stationsgerät entweder ein Functional-Stationsgerät (51) oder ein Stimulus-Stationsgerät (16) ist, wobei die Functional-Stationsgeräte auschließlich auf Mitteilungen in dem Functional-Mitteilungsprotokoll ansprechen, während die Stimulus-Stationsgeräte ausschließlich auf Mitteilungen im Stimulus-Mitteilungsprotokoll ansprechen, wobei das Verfahren weiterhin durch die folgenden Schritte gekennzeichnet ist:
(h) Nachbilden eines Functional-Stationsgerätes (45,46) für jedes Stimulus-Stationsgerät (61,62), das mit dem Telefonsystem verbunden ist,
(i) Austauschen von Signalisierungs- und Überwachungsmitteilungen (S- und S-Mitteilungen) mit dem Stimulus-Mitteilungsprotokoll ausschließlich zwischen Schritt (h) und einem rufenden oder angerufenen Stimulus-Stationsgerät,
(j) Weiterleiten einer ankommenden Signalisierungs- und überwachungsmitteilung des Functional-Mitteilungsprotokolls an jedes der Stationsgeräte, wobei eine Ausnahme darin besteht, daß der Schritt (h) für ein Stimulus-Stationsgerät durchgeführt wird, für das die Functional-Mitteilungsprotokoll-Signalisierungs- und Überwachungsmitteilung Information enthält.

7. Verfahren nach Anspruch 6, bei dem das Stimulus-Stationsgerät nur auf Signalisierungs- und Überwachungsmitteilungen anspricht, die durch ein vorgegebenes Stimulus-Mitteilungsprotokoll-Bitmuster gekennzeichnet sind.

8. Verfahren nach Anspruch 7, bei dem der Schritt (h) in Abhängigkeit von einer ankommenden Signalisierungs- und Überwachungsmitteilung aufgerufen wird, die durch das vorgegebene Stimulus-Mitteilungsprotokoll-Bitmuster charakterisiert ist.

9. Verfahren nach Anspruch 5, bei dem jedes Stationsgerät ausschließlich mit dem Stimulus- oder dem Functional-Mitteilungsprotokoll kompatibel ist, wobei das Verfahren weiterhin durch die folgenden Schritte gekennzeichnet ist:
(k) Nachbilden eines Functional-Stationsgerätes (45,46) für jedes mit dem Telefonsystem verbundene Stimulus-Endgerät (61, 62),
(i) Austauschen von Signalisierungs-und Überwachungsmitteilungen des Stimulus-Mitteilungsprotokolls ausschließlich zwischen Schritt (h) und einem rufenden und angerufenen Stimulus-Stationsgerät,
(j) Weiterleiten einer ankommenden Signalisierungs- und Überwachungsmitteilung des Functional-Mitteilungsprotokolls an jedes der Stationsgeräte, wobei eine Ausnahme darin besteht, daß der Schritt (h) für ein Stimulus-Stationsgerät ausgeführt wird, für das die Funktional-Mitteilungsprotokoll-Signalisierungs- und Überwachungsmitteilung Information enthält.

## Revendications

1. Système téléphonique à touches destiné à assurer des communications sous forme de signaux numériques entre plusieurs voies (19) par l'intermédiaire d'un disposition de commutation (100), chaque voie (19) étant destinée à connecter un appareil (13-17) d'une station respective, un trajet (11) de communication étant connecté entre le dispositif de commutation (100) et plusieurs voies (19), le fonctionnement du dispositif de commutation (100) étant dirigé par un processeur central (7), caractérisé en ce que
le trajet de communication (11) est destiné à former n paires de canaux de transmission multiplexés temporellement (TDMT) et de réception multiplexés temporellement (TDMR), chaque canal ayant plusieurs positions de bits pour le transport d'informations provenant d'un utilisateur d'un appareil d'une station et destinées à un tel utilisateur, une paire de canaux TDMT, TDMR au moins étant associée exclusivement à chaque voie, chaque canal TDMT et chaque canal TDMR comprenant une position de bit de signalisation et de surveillance (S et S) à plusieurs positions de bits pour le transport de signaux de signalisation et de surveillance provenant de l'appareil d'une station et destinées à un tel appareil,
le dispositif de commutation (100) est destiné à coupler les signaux de communication entre les positions des bits de canaux choisis TDMT et des positions de bits de canaux choisis TDMR, à l'exclusion des positions de bits S et S, sous la direction du processeur central, et
un dispositif d'interface (8) est destiné à transférer les informations de la position de bit S et S d'un canal TDMT sélectionné au processeur central (7) et à transférer l'information du processeur central à la position de bit S et S d'au moins un canal TDMR indépendamment des trajets de communication formés par le dispositif de commutation.

2. Procédé de commande d'un système téléphonique à touches destiné à assurer des communications sous forme de signaux numériques entre plusieurs voies (19) par l'intermédiaire d'un dispositif de commutation (100), chaque voie (19) étant destinée à connecter un appareil (13-17) d'une station respective, un trajet de communication (11) étant connecté entre le dispositif de commutation (100) et les voies (19), le fonctionnement du dispositif de commutation étant dirigé par un processeur central (7), chacun des appareils de station ayant un dispositif de traitement destiné à commander les fonctions de l'appareil de station en fonction d'une action de commande à touches provenant d'un utilisateur et à la suite de messages reçus du processeur central, le procédé étant caractérisé par les étapes suivantes :
(a) la disposition d'au moins un canal bidirectionnel multiplexé temporellement (TDMT, TDMR) associé à chaque appareil de station par l'intermediaire du trajet de communication (11) et d'au moins un canal de messages multiplexé temporellement (S et S) en association avec chaque appareil de station par le trajet (11) de communications,
(b) le couplage des canaux de messages multiplexés temporellement du trajet de communications au processeur central par sélection de routine de l'un des appareils de station après un autre pour la transmission d'un message par son canal associé de message,
(c) à la suite d'un message prédéterminé de l'appareil de station appelante choisie, l'échange de messages d'établissement d'appel entre le processeur central, l'appareil de station appelante et un appareil de station appelée par l'intermédiaire des canaux associés de message multiplexés temporellement dans le trajet de communications, et
(d) à la suite d'un message prédéterminé provenant de l'appareil de la station appelée par l'intermédiaire du dispositif de commutation, l'échange synchrone d'informations entre les canaux bidirectionnels multiplexés temporellement associés aux appareils des stations appelante et appelée.

3. Procédé selon la revendication 2, caractérisé en ce que chaque voie a au moins un canal bidirectionnel multiplexé temporellement et au moins un canal de message multiplexé temporellement, le fonctionnement du système téléphonique à touches étant adapté à être commandé automatiquement par l'un quelconque des appareils de station après que l'appareil de station a été connecté à l'une des voies.

4. Procédé selon la revendication 2 ou 3, caractérisé en ce que chaque échange de message dans l'étape (c) se produit avec un protocole prédéterminé parmi plusieurs protocoles de message.

5. Procédé selon la revendication 4, dans lequel les protocoles de message comportent un protocole de message de stimulus et un protocole de message fonctionnel, le procédé comprenant les étapes supplémentaires suivantes :
(e) la création de messages de stimulus et de messages fonctionnels dans le processeur central (7),
(f) la transmission de chaque message de stimulus par un canal de message associé à un appareil auquel est destiné le message de stimulus, et
(g) la transmission de chaque message fonctionnel par l'intermédiaire de plusieurs canaux de messages dont l'un au moins est associé à un appareil auquel est adressé le message fonctionnel.

6. Procédé selon la revendication 5, dans lequel chaque appareil de station est un appareil (51) de station fonctionnelle ou un appareil (16) de station de stimulus, l'appareil de station fonctionnelle étant sensible exclusivement aux messages d'un protocole de message fonctionnel et l'appareil de station de stimulus étant exclusivement commandé par des messages de protocole de message de stimulus, le procédé étant en outre caractérisé par les étapes suivantes :
(h) l'émulation d'un appareil (45, 46) de station fonctionnelle pour chaque appareil (61, 62) de station de stimulus connecté au système téléphonique,
(i) l'échange de messages de signalisation et de surveillance (S et S) du protocole de message de stimulus exclusivement entre l'étape (h) et un appareil appelant ou appelé de station de stimulus, et
(j) le relais d'un message reçu de signalisation et de surveillance du protocole de message fonctionnel à chaque appareil de station à l'exception de l'exécution de l'étape (h) pour un appareil de station de stimulus pour lequel le message de signalisation et de surveillance du protocole de message fonctionnel contient des informations.

7. Procédé selon la revendication 6, dans lequel l'appareil de station de stimulus est commandé uniquement par les messages de signalisation et de surveillance caractérisés par un dessin prédéterminé de bits de protocole de message de stimulus.

8. Procédé selon la revendication 7, dans lequel l'étape (h) est invoquée à la suite d'un message reçu de signalisation et de surveillance caractérisé par le dessin prédéterminé de bits de protocole de message de stimulus.

9. Procédé selon la revendication 5, dans lequel chaque appareil de station est compatible exclusivement avec l'un des protocoles de message de stimulus et fonctionnel, le procédé étant en outre caractérisé par les étapes suivantes :
(k) l'émulation d'un appareil (45, 46) de station fonctionnelle pour chaque appareil (61, 62) de terminal de stimulus connecté au système téléphonique,
(i) l'échange de messages de signalisation et de surveillance du protocole de message de stimulus exclusivement entre l'étape (h) et un appareil appelant ou appelé d'une station de stimulus, et
(j) le relais d'un message reçu de signalisation et de surveillance du protocole de message fonctionnel vers chaque appareil de station, à l'exception de l'appareil qui exécute l'étape (h) pour un appareil. de station de stimulus pour lequel le message de signalisation et de surveillance du protocole de message fonctionnel contient des informations.
